Europäisches Patentamt

European Patent Office

Office européen des brevets

(19)

(11) Publication number: **0 298 554**

**A1**

(12) **EUROPEAN PATENT APPLICATION**

(21) Application number: 88201385.7

(51) Int. Cl.⁴: **A01B 49/06**

(22) Date of filing: 04.07.88

(30) Priority: 06.07.87 NL 8701582

(43) Date of publication of application:
11.01.89 Bulletin 89/02

(84) Designated Contracting States:
DE FR GB IT NL

(71) Applicant: C. van der Lely N.V.
Weverskade 10 P.O. Box 26
NL-3155 ZG Maasland(NL)

(72) Inventor: Bom, Cornelis Johannes Gerardus
16, Laan van Nieuw Rozenburg
Rozenburg(NL)
Inventor: Ouwerkerk, Cornelis Gerardus
19, Eikenlaan
Rozenburg(NL)

(74) Representative: Mulder, Herman et al
Octrooibureau Van der Lely N.V. Weverskade
10 P.O. Box 26
NL-3155 ZG Maasland(NL)

(54) **A soil cultivating machine.**

(57) The invention relates to a soil cultivating machine comprising a frame portion (1) wherein are
accommodated a plurality of soil working members
(3) and, located therebehind, a roller (10) which is
supported by means of a carrier structure (9). The
carrier structure (9) is mounted pivotably on the
frame portion (1), the arrangement being such that
the frame portion (1) cum soil working members (3)
is movable in height relative to the roller (10) during
operation, and a seed drill (15) is mounted on the
carrier stucture (9) for the roller (10). The seed drill
(15), which is connected detachably to both the
carrier structure (9) for the roller (10) and to the
frame portion (1) carrying the soil working members
(3), is supported pivotably at its bottom side into
spaced apart positions on the carrier structure (9) for
the roller (10) and is in at least one superjacent point
connected pivotably to the frame portion (1) carrying
the soil working members (3).

Fig. 1

EP 0 298 554 A1

# A SOIL CULTIVATING MACHINE

The invention relates to a soil cultivating machine comprising a frame portion wherein are accommodated a plurality of soil working members and, located therebehind, a roller which is supported by means of a carrier structure, which carrier structure is mounted pivotably on the frame portion, the arrangement being such that the frame portion cum soil working members is movable in height relative to the roller during operation.

At present, soil cultivating machines of the above-defined type are preferably used in combination with a seed drill, so that it will be possible to obtain in a single operating run a seed bed which is sown simultaneously. Using the construction according to the invention, it is now possible to obtain a combination of the machine with a seed drill wherein, during operation, any upward movement of the frame portion relative to the roller cannot adversely affect the action of the seed drill.

According to the invention, this is achieved in that a seed drill is mounted on the carrier structure for the roller. With the aid of this provision it is possible for the carrier structure carrying the roller and the seed drill mounted thereon to maintain, during any upward movement of the frame portion accommodating the soil working members, substantially the same position, so that the sowing action of the seed drill is not affected or to a hardly appreciable extent only.

For a better understanding of the invention and to show how the same may be carried into effect, some embodiments thereof will now be described with reference to the accompanying drawings, in which:

Figure 1 is a side view of a combination according to the invention;

Figure 2 is part of a plan view of the combination shown in Figure 1;

Figure 3 is a side view of a second embodiment of a combination according to the invention, and

Figure 4 is a plan view of the combination shown in Figure 3.

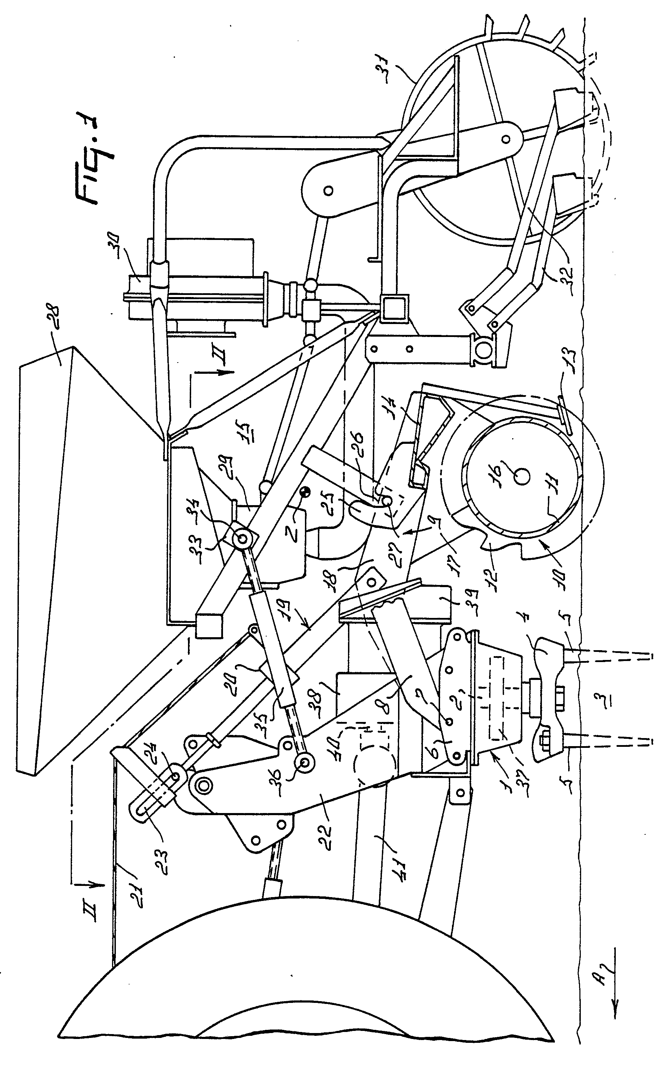

The implement shown in Figures 1 and 2 is a soil cultivating machine which is intended in particular for the preparation of a seed bed. The machine comprises a box-like frame portion 1 which extends transversely to the direction of operative travel A and wherein there are supported at equal interspaces of preferably 25 cms the upwardly directed, preferably vertical, shafts 2 of soil working members 3. Each of the soil working members 3 includes an at least substantially horizontal carrier 4 which is arranged on the end of a shaft 2 projecting from the bottom side of the frame portion 1 and at its ends is provided with downwardly directed soil working elements 5. Near its ends, the box-like frame portion 1 is provided at the upper side with a support 6 which extends at least substantially parallel to the direction of operative travel A and through the entire width of the upper side thereof. Between the front side of the frame portion 1 and a plane through the rotary axes of the soil working members 3, each support 6 is provided near its upper side with a pin 7 extending transversely to the diretcion of operative travel A, the arrangement being such that the respective pins 7 are in alignment. On the pins 7 there are arranged, freely pivotably along the inner sides of the supports 6, rearwardly extending arms 8 which constitute part of a carrier structure 9 for a roller 10. In this embodiment, the roller 10 is designed as a packer roller comprising a cylindrical carrier 11 and cams 12, between which there are provided scraper elements at the rear side. The carrier structure 9 furthermore includes a plate profile 14 which is arranged between the arms 8 and is of the flat shape as shown in Figure 2 so as to provide space for a drive shaft, by means of which an implement 15, to be described in further detail hereinafter and to be combined with the machine, can be driven. By means of shafts 16, the roller 10 is arranged freely rotatably between plate-shaped supports 17 located at the rear side of the arms 8 and extending downwardly. Near its midway point, the plate profile 14 is provided with a forwardly extending arm 18 which is connected pivotably at the front side by means of a pin to the upper side of the frame portion 1. The relevant pin is located in alignment with the pins 7 for the arms 8 of the carrier structure 9. In a point which, seen in side view, is located just in front of the front side of the roller 10 (Figure 1) the arm 18 is connected pivotably to one end of an adjusting rod 19. The adjusting rod 19 comprises a locking mechanism 20 which can be operated from a tractor moving the implement via a flexible control member 21, so as to enable, with the aid of the lifting hitch of the tractor, a change in the position of the roller 10 relative to the frame portion 1 and hence in the working depth of the soil working members 3. The upper end of the adjusting rod 19 is arranged at the upper side of a trestle 22 located near the centre of the frame portion 1. The trestle 22 includes a three-point connection for coupling the machine to the three-point lifting hitch of a tractor. The pivotal connection between the adjusting rod 19 and the upper side of the trestle 22 comprises a slot 23 provided in the adjusting rod, in which slot 23 is freely movable a pin 24 fitted to the trestle, the arrangement being such that the pin 24, which during normal operation is at the lower side of the slot 23, can move upwardly when the frame portion 1 moves upwardly, should the soil working members hit a hard object or a suchlike obstacle. Equispaced from its midway point, the plate profile 14 is provided with two supporting plates 25 which extend at least substantially parallel to the direction of operative travel A. Each of the supporting plates 25 is provided at its upper side with a slightly rearwardly curved slot 26 (Figure 1) wherein can be positioned a pin 27, which pin is provided at the bottom side of the frame of an implement 15 to be combined with the machine, which implement 15 in this embodiment is constituted by a seed drill in the form of a pneumatic one that is shown schematically. The seed drill comprises a hopper 28, a distributing mechanism 29 and a fan 30 which can be driven via the machine drive and a drive shaft extending over the plate profile 14. The distributing mechanism 29 is driven by means of a stepper wheel 31, whilst the seed material is introduced into the soil via seed pipes 32. The pins 27 form a pivotal connection between the frame of the seed drill and the carrier structure 9 for the roller 10. Seen in plan view, the frame of the seed drill 15 is fitted just in front of the pins 27 with two supports 33 which are located at a higher level than the pins 27 and to which a length-adjustable rod 35 is connected pivotally by means of a pin 34. At the side of the seed drill 15 facing the frame portion, the pins 34 constitute a pivotal connection. Seen in plan view, the pins 34 are located on both sides of the centre of the plate profile 14 at a distance which corresponds to that between the pins 27. Seen in plan view, the pins 27 are located in the region of the centre of the front half of the roller 10, whilst the pins 34 are located in the region of the front side of the roller. By means of its other end, each rod 35 is mounted pivotally with the aid of a pin 36 near the upper side of the coupling trestle 22, the arrangement being such that, seen in side view, the pins 27, 34, 36 and the pins 7 for the arms 8 and the arm 18 constitute the vertices of a pivotal quadrangle (Figure 1), this quadrangle being at least substantially a parallelogram construction.

Inside the box-like frame portion 1, each of the shafts 2 of the soil working members 3 is provided with a pinion 37, the arrangement being such that the pinions 37 on the shafts 2 of adjacent soil working members 3 are in driving connection with each other. Near the centre of the frame portion 1, the shaft 2 of a soil working member 3 is extended upwardly and by means of this extension reaches into a gear box 38 positioned on the upper side of the frame portion 1. Inside the gear box 38, the extension is connected via a bevel gear transmission and a speed variator 39 provided at the rear side of the gear box to a shaft 40 which extends in the direction of operative travel A and projects from the gear box both at the front and at the rear side. The front end of the shaft 40 extending beyond the gear box 38 can be coupled to the power take-off shaft of a tractor via an intermediate shaft 41, whilst the rear end of the shaft 40 extending beyond the gear box can be connected via a connecting shaft (not shown) extending to over the plate profile 14 to a shaft of the fan 30 of the pneumatic seed drill 15.

The combination of a soil cultivating machine and a seed drill as described in the foregoing operates as follows.

During operation, the machine is connected to the three-point lifting hitch of a tractor by means of the trestle 22, and the seed drill 15 is connected pivotably in the above-described manner by means of the pins 27 and 34 to the carrier structure 9 for the roller 10 and by means of the rods 35 and the pins 36 to the trestle 22. During movement in a direction indicated by the arrow A, the soil working members 3 can be driven such from the power take-off shaft of the tractor via the intermediate shaft 41 and the above-described drive that adjacent soil working members 3 rotate in opposite directions, whereby their soil working elements 5 cultivate at least contiguous strips of soil. As has already been stated in the foregoing, the fan 30 of the seed drill 15 bearing on the upper side of the roller 10 is also driven from the power take-off shaft via the shaft 40, while from the hopper 28 via the distributing mechanism 19 there is fed seed material which is introduced into the soil via the respective seed pipes 32. During operation, the machine frame portion 1 carrying the soil working members 3 can deflect upwardly relative to the carrier structure 9 for the roller 10 about the pins 7 for the arms 8 and 18 in that the pin 24 can move upwardly at the uppermost coupling point of the adjusting rod 19 constituted by the pin 24 in the slot 23. In this situation, due to the presence of the pivotal quadrangles constituted by the pins 27, 34, 36 and the pins 7 between the seed drill and the carrier structure 9 for the roller 10 and the trestle 2, respectively, it is accomplished that the point of gravity $z$ of the seed drill hardly moves, so that an upward movement of the frame portion 1 does not have a disadvantageous effect on the sowing function of the drill. The presence of the seed drill 15, which during operation bears with its full weight on the roller 10, accomplishes that the packer roller continues to perform its rotary movement at all times, while an upward movement of the frame portion 1 carrying the soil working members 3 is not impeded by the weight of the machine. Due to the presence of the slots 26 for the pins 27 and the rods 35, the seed drill can easily be removed and be fitted again. By means of the rods 35, it is possible to obtain a perfect arrangement of the seed drill so as to ensure its optimum efficiency.

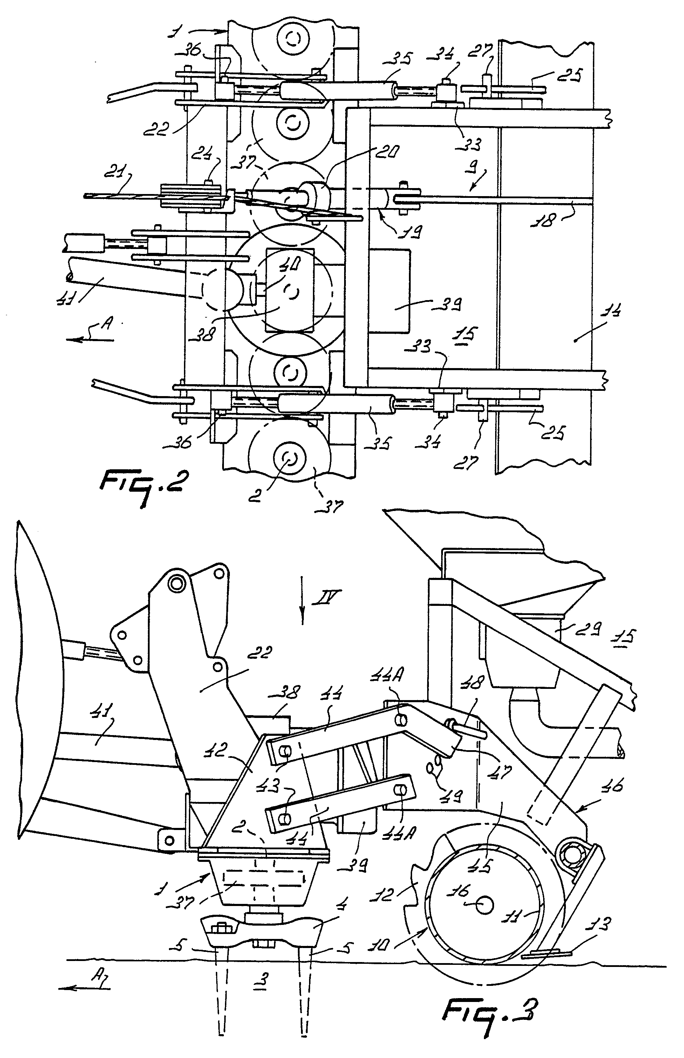

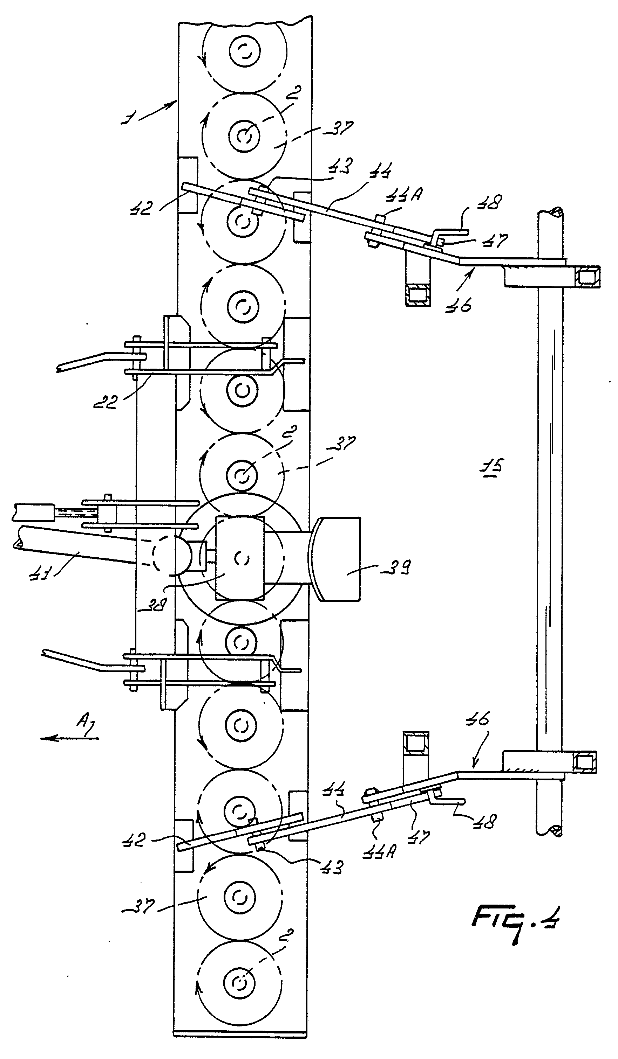

Figures 3 and 4 show a second embodiment of a combination according to the invention. Component parts corresponding to those of the combination shown in the first embodiment are denoted by the same reference numerals. In this embodiment, at some distance from its ends, the upper side of the frame portion 1 is provided with an upwardly extending support 42. As is apparent from Figure 4, each support 42 is located parallel to a vertical plane enclosing an angle of approximately 15° with a vertical plane in the direction of operative travel A. In this situation, the rear side thereof is situated closer to a symmetry plane through the centre of the frame portion 1 than its front side. To each support 42 there are pivotally connected rearwardly extending, superjacent arms 44 by means of pins 43. The rear ends of the arms 44 are connected pivotally by means of pins 44A to supporting plates 45 which constitute part of a carrier structure 46 for the roller 10. By means of the pins 43, the arms 44 constitute a pivotal quadrangle which is in the form of a parallelogram. In this embodiment, the seed drill 15 is mounted rigidly on the carrier structure 46 for the roller 10. At its rear side, each of the upper arms 44 is provided with an obliquely downwardly and rearwardly extending stop 47. By means of its upper side, each stop 47 can co-operate with a stop constituted by a pin 48 (Figure 3). The pin 48 may be inserted into any one of a plurality of holes 49 located on the arc of a circle whose centre coincides with the rear pivot point for an upper arm 44. As is apparent from Figure 3, the respective pins 43 and 44A are located substantially one above the other and the pins 44A are located in the region of the front side of the roller 10. The working depth of the soil working members 3 can be set by means of the pin 48 and the stop 47 with the aid of the roller 10. In the construction shown in Figures 3 and 4, during operation, the frame portion 1 can also deflect upwardly when meeting an obstacle in the soil by means of the pivotal quadrangles, in the form of a parallelogram constituted by the arms 44 and the pins 43 and 44A, without this upward movement of the frame portion 1 having any negative effect on the sowing action of the seed drill 15. When one wants to change the working depth of the soil working member 3, the pin 48 can be inserted in a different hole 49, whereafter the stop 47 again comes to bear against the pin 48 to determine the new working depth of the soil working members. Due to the presence of the parallelogram structures between the frame portion 1 and the carrier structure 46 for the roller 10, the roller 10 maintains the same position during operation, so that the position of the scraper elements 13 provided at the rear side thereof does not change either.

The specific arrangement of the pivot quadrangles, which converge in the rearward direction, ensures an increase in the stability of the combination.

## Claims

1. A soil cultivating machine comprising a frame portion (1) wherein are accommodated a plurality of soil working members (3) and, located therebehind, a roller (10) which is supported by means of a carrier structure (9), which carrier structure (9) is mounted pivotably on the frame portion (1), the arrangement being such that the frame portion (1) cum soil working members (3) is movable in height relative to the roller (10) during operation, characterized in that a seed drill (15) is mounted on the carrier structure (9) for the roller (10).

2. A soil cultivating machine as claimed in claim 1, characterized in that the seed drill (15) is connected detachably to both the carrier structure (9) for the roller (10) and to the frame portion (1) carrying the soil working members (3).

3. A soil cultivating machine as claimed in claim 2, characterized in that the frame of the seed drill (15) is supported pivotally at its bottom side in two spaced-apart positions on the carrier structure (9) for the roller (10) and in at least one superjacent point thereof is connected pivotally to the frame portion (1) carrying the soil working members (3).

4. A soil cultivating machine as claimed in claim 3, characterized in that, seen in plan view, the upper pivotal connection (34 to 36) at the side facing the soil cultivating machine is located in front of the pivotal connection (25 to 27) to the carrier structure (9).

5. A soil cultivating machine as claimed in claim 4, characterized in that, seen in plan view, the two pivotal connections (34 to 36, 25 to 27) are located within the front half of the roller (10).

6. A soil cultivating machine as claimed in any one of claims 3 to 5, characterized in that the distance between the lower pivotal connection (25 to 27) and a vertical plane through the axis of rotation of the roller (10) is approximately half the radius of the roller (10), and that the upper pivotal connection (34 to 36) is located at least substantially above the front side of the roller (10).

7. A soil cultivating machine as claimed in any one of claims 3 to 6, characterized in that the lower pivotal connection (25 to 27) includes two pins (27) which are pivotal in upwardly directed slots (26), and that the upper pivotal connection (34 to 36) includes a length-adjustable rod (35).

8. A soil cultivating machine as claimed in any one of claims 3 to 7, characterized in that, seen in side view, the pivotal connections (25 to 27, 34 to 36) together with the pivotal connection (7) between the carrier structure (9) for the roller (10) and the frame portion (1) supporting the soil working members (3) constitute the vertices of a pivotal quadrangle.

9. A soil cultivating machine as claimed in claim 8, characterized in that the pivotal quadrangle is a parallelogram.

10. A soil cultivating machine as claimed in any one of the preceding claims, characterized in that between the carrier structure (9) for the roller (10) and the upper side of a trestle (22) on the frame portion (1) carrying the soil working members (3) there is provided an adjusting rod (19), which adjusting rod is connected at its upper side to the trestle (22) by means of a slot (23) and a pin (24).

11. A soil cultivating machine as claimed in any one of the preceding claims, characterized in that the carrier structure (9) for the roller (10) includes a plate-shaped profile (14) which extends above the roller (10) and is connected pivotably to the frame portion (1) supporting the soil working members (3) by means of arms (8) provided at the ends and an arm (18) interposed between the ends.

12. A soil cultivating machine as claimed in claim 1, characterized in that the carrier structure (46) for the roller (10) is connected by means of at least one pivotal quadrangle (43, 44, 44A) to the frame portion (1) carrying the soil working members (3), and that the pivotal quadrangle is provided with a stop (47) which is adapted to co-operate with an adjustable stop (48) on the carrier structure (46) for the roller (10).

13. A soil cultivating machine as claimed in claim 12, characterized in that the pivotal quadrangle (43, 44, 44A) comprises superposed arms (44) which extend in the direction of operative travel A.

14. A soil cultivating machine as claimed in claim 13, characterized in that the upper arm (44) of the pivotal quadrangle (43, 44, 44A) is provided with a stop (47) which is adapted to co-operate with a stop (48) which is adjustable to a plurality of positions and is provided on the carrier structure (46) for the roller (10).

15. A soil cultivating machine as claimed in any one of claims 12 to 14, characterized in that two interspaced pivotal quadrangles (43, 44, 44A) are arranged between the carrier structure (46) for the roller (10) and the frame portion (1) carrying the soil working members (3).

16. A soil working machine as claimed in claim 15, characterized in that, seen in plan view, the arms (44) of the pivotal quadrangle (43, 44, 44A) enclose an angle with the direction of operative travel A of the machine.

17. A soil cultivating machine as claimed in claim 15 or 16, characterized in that, seen in plan view, the pivotal quadrangles (43, 44, 44A) converge in the rearward direction.

18. A soil cultivating machine as claimed in any one of claims 12 to 17, characterized in that a pivotal quadrangle (43, 44, 44A) is formed by a parallelogram construction.

Fig.1

FIG.2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | US-A-4 509 438 (RAU et al.)<br>* Abstract; column 2, line 14 - column 2, line 44; column 3, line 34 - column 3, line 69; figures 1-3 *<br>--- | 1,10 | A 01 B 49/06 |
| X | DE-A-3 105 640 (DREYER)<br>* Abstract; page 7, paragraph 2 - page 8, paragraph 1; figures 1-4 * | 1-4 | |
| A | --- | 7,11 | |
| A | FR-A-2 560 480 (RABEWERK HEINRICH CLAUSING)<br>* Abstract; page 7, line 11 - page 7, line 18; figure 2 *<br>----- | 12-15, 18 | |

TECHNICAL FIELDS SEARCHED (Int. Cl.4)

A 01 B

The present search report has been drawn up for all claims

| Place of search | Date of completion of the search | Examiner |
|---|---|---|
| THE HAGUE | 05-10-1988 | VON ARX V.U. |

EPO FORM 1503 03.82 (P0401)